# FASCICULE DE BREVET EUROPEEN

(11) **EP 3 893 637 B1**
(45) Date de publication et mention de la délivrance du brevet: **11.01.2023**
(21) Numéro de dépôt: 20710246.8
(22) Date de dépôt: 18.02.2020
(51) Int. Cl.: A01M 7/00

(54) **COUVERCLE POUR CUVE COMPRENANT UN EVENT POURVU D'UN FLOTTEUR EN SERIE AVEC UNE CHICANE**
DECKEL FÜR EINEN TANK MIT ENTLÜFTUNG, MIT SCHWIMMER UND ABLENKPLATTE
LID FOR TANK COMPRISING A VENT PROVIDED WITH A FLOAT IN SERIES WITH A BAFFLE

(30) Priorité: 22.02.2019 FR 1901848
(43) Date de publication de la demande: 20.10.2021
(73) Titulaire: Exel Industries, 51200 Epernay (FR)
(72) Inventeur: PITAUD, Sylvain, 75009 PARIS (FR)
(74) Mandataire: Argyma
(86) Numéro de dépôt international: PCT/FR2020/050303
(87) Numéro de publication internationale: WO 2020/169923

(56) Documents cités:
- EP-A1- 1 637 473
- US-A- 3 888 382
- US-A- 4 541 544
- US-A- 5 575 397
- US-A1- 2002 011 493

## Description

### DOMAINE TECHNIQUE

L'invention concerne un couvercle pour cuve, notamment destinée à contenir un produit phytosanitaire ou un engrais liquide, ainsi qu'un ensemble comprenant une cuve et un tel couvercle.

### ÉTAT DE LA TECHNIQUE ANTÉRIEURE

Dans le domaine de la pulvérisation agricole, il est connu d'équiper un engin agricole d'une cuve remplie de produit phytosanitaire ou d'engrais liquide. Ce produit phytosanitaire ou cet engrais liquide est ensuite aspirée par une pompe, puis pulvérisé dans les cultures, lorsque l'engin agricole se déplace dans le champ de cultures.

Cette cuve présente une ouverture qui est définie par un rebord d'ouverture et qui est refermée par un couvercle comprenant, de manière classique, un évent communiquant d'une part avec l'extérieur de la cuve et d'autre part avec l'intérieur de la cuve, de sorte à autoriser de l'air à entrer à l'intérieur de la cuve.

De cette manière, de l'air peut venir remplacer, à l'intérieur de la cuve, le volume de produit phytosanitaire ou d'engrais liquide aspiré par la pompe. Lors du remplissage de la cuve en produit phytosanitaire ou d'engrais liquide, par refoulement de la pompe, de l'air peut en outre s'échapper de la cuve afin de libérer du volume à l'intérieur de la cuve pour le produit phytosanitaire ou l'engrais liquide.

Cela permet ainsi d'assurer le bon fonctionnement de la pompe, et donc l'aspiration du produit phytosanitaire ou de l'engrais liquide contenu dans la cuve pour sa pulvérisation sur les cultures ou même le refoulement de produit phytosanitaire ou d'engrais liquide vers l'intérieur de la cuve.

Afin d'éviter que du produit phytosanitaire ou de l'engrais liquide ne s'échappe de la cuve à travers l'évent, notamment lorsque l'engin agricole se déplace dans le champ de cultures sur un terrain accidenté et que le produit phytosanitaire ou l'engrais liquide subit des secousses, il est par exemple connu d'équiper l'évent d'un flotteur.

Le flotteur forme une soupape qui, par flottement à la surface du produit phytosanitaire ou de l'engrais liquide contenu dans la cuve, vient en appui contre un siège de soupape porté par l'évent pour le boucher et ainsi éviter que du produit phytosanitaire ou de l'engrais liquide ne s'échappe de la cuve à travers l'évent.

Or, cette solution n'est fiable que dans la mesure où le dimensionnement de l'évent n'autorise qu'un débit limité d'air, ce qui va à l'encontre du dimensionnement actuel de la pompe qui tend à augmenter le débit de produit phytosanitaire ou d'engrais liquide aspiré et donc qui tend, au contraire, à augmenter le débit d'air circulant à travers l'évent.

Ainsi, cette solution ne permet pas d'augmenter le débit d'air circulant à travers l'évent, sans risque de fuites de produit phytosanitaire ou d'engrais liquide à l'extérieur de la cuve.

Une autre solution en forme d'un évent comprenant des chicanes est décrit dans le brevet US 3 888 382 A.

### EXPOSÉ DE L'INVENTION

L'invention a pour objectif de pallier cet inconvénient, notamment en proposant un couvercle pour cuve destinée à contenir un liquide, tel qu'un produit phytosanitaire ou un engrais liquide, le couvercle comprenant un évent qui communique d'une part avec l'extérieur de la cuve et d'autre part avec l'intérieur de la cuve, et qui est pourvu d'un flotteur en série avec une chicane, de sorte à permettre un dimensionnement de l'évent autorisant un débit d'air plus important, sans risquer que du liquide s'échappe de la cuve via l'évent.

Plus précisément, l'invention a pour objet un couvercle pour cuve destinée à contenir un liquide, tel qu'un produit phytosanitaire ou un engrais liquide, le couvercle étant destiné à obturer une ouverture de la cuve définie par un rebord d'ouverture, le couvercle comprenant un évent comprenant lui-même :
- une première ouverture centrée sur un premier axe de direction axiale et destinée à communiquer avec l'intérieur de la cuve d'un premier côté de la première ouverture suivant le premier axe, la première ouverture comprenant en outre un rebord d'ouverture formant, du premier côté de la première ouverture, un siège de soupape,
- au moins une deuxième ouverture par l'intermédiaire de laquelle la première ouverture est destinée à communiquer avec l'extérieur de la cuve, d'un deuxième côté de la première ouverture qui est opposé au premier côté suivant le premier axe,
- un flotteur conçu pour se déplacer, par flottement à la surface du liquide contenu dans la cuve, depuis une position d'ouverture vers une position de fermeture de la première ouverture dans laquelle le flotteur est en appui contre le siège de soupape, le flotteur formant ainsi une soupape, et
- au moins une chicane par l'intermédiaire de laquelle la première ouverture et la ou les deuxièmes ouvertures communiquent ensemble, du deuxième côté de la première ouverture.

Selon des variantes de réalisation qui peuvent être prises ensemble ou séparément :
- la ou les deuxièmes ouvertures sont situées radialement à l'extérieur de la première ouverture par rapport au premier axe ;
- la ou chacune des chicanes définit un chemin ou encore un parcours en zigzag ;
- la ou chacune des chicanes comprend au moins deux coudes se succédant entre la première ouverture et la, l'une des ou les deuxièmes ouvertures ;
- le chemin défini par la ou chacune des chicanes entre la première ouverture et la, l'une des ou les deuxièmes ouvertures comprend :
   o une première portion s'étendant globalement axialement depuis un premier orifice, orienté globalement axialement et situé en regard de la première ouverture, vers un premier des coudes,
   o une deuxième portion s'étendant radialement et/ou circonférentiellement par rapport au premier axe, depuis le premier coude vers un deuxième des coudes,
   o une troisième portion s'étendant depuis le deuxième coude vers un deuxième orifice qui est orienté globalement axialement, qui est axialement décalé des premier et deuxième coudes, dans un sens opposé à la première ouverture, et qui communique avec la, l'une des ou les deuxièmes ouvertures ;
- la deuxième portion du chemin défini par la ou chacune des chicanes comprend une première surface inclinée, orientée en regard du deuxième orifice et s'étendant depuis le premier orifice vers le deuxième coude qui est axialement décalé dans un sens opposé à la première ouverture ;
- la deuxième portion du chemin défini par la ou chacune des chicanes comprend une deuxième surface inclinée, orientée en regard du premier orifice et s'étendant depuis le premier coude vers le deuxième orifice qui est axialement décalé vers la première ouverture par rapport au premier coude ;
- le chemin défini par la ou chacune des chicanes comprend une quatrième portion s'étendant depuis le deuxième orifice vers la, les ou chacune des deuxièmes ouvertures qui sont situées radialement à l'extérieur du deuxième orifice et qui sont axialement décalées par rapport aux premier et deuxième coudes, dans un sens opposé à la première ouverture ;
- la quatrième portion du chemin défini par chacune des chicanes comprend une troisième surface inclinée, orientée d'un côté opposé au premier orifice et s'étendant radialement de l'extérieur vers l'intérieur jusqu'au deuxième orifice qui est axialement décalé vers la première ouverture ;
- le couvercle comprend une première partie de couvercle dans laquelle est formée la première ouverture ;
- l'évent comprend un bouchon rapporté sur la première partie de couvercle, du deuxième côté de la première ouverture, et dans lequel la ou les chicanes et la ou les deuxièmes ouvertures sont formées ;
- le bouchon comprend :
   o une première pièce de bouchon, et
   o une deuxième pièce de bouchon reliée à la première pièce de bouchon et axialement interposée entre la première pièce de bouchon et la première partie de couvercle, la deuxième pièce de bouchon comprenant :
      ▪ une partie centrale située en regard de la première ouverture,
      ▪ une partie périphérique radialement intérieure par rapport au premier axe, entourant la partie centrale et dans laquelle la ou les chicanes sont au moins en partie formées,
      ▪ une partie périphérique radialement extérieure par rapport au premier axe, entourant la partie périphérique radialement intérieure et définissant la ou les deuxièmes ouvertures avec la première pièce de bouchon ;
- la partie périphérique radialement intérieure de la deuxième pièce de bouchon porte la première portion, le premier orifice, le premier coude, la deuxième portion, le deuxième coude, la troisième portion et le deuxième orifice du chemin de la ou de chaque chicane ;
- la deuxième pièce de bouchon est fixée à la première pièce de bouchon par l'intermédiaire de la partie centrale ;
- la deuxième pièce de bouchon est fixée à la première partie de couvercle par l'intermédiaire de la partie périphérique radialement extérieure ;
- la partie centrale et la partie périphérique radialement intérieure de la deuxième pièce de bouchon forment ensemble une surface continue située en regard et à distance de la première ouverture, une projection orthogonale de ladite surface, sur un plan perpendiculaire au premier axe, présentant un diamètre sensiblement égal à un diamètre de la première ouverture ;
- l'évent comprend un support de flotteur rapporté sur la première partie de couvercle, du premier côté de la première ouverture, et définissant avec la première partie de couvercle un espace à l'intérieur duquel le flotteur est logé et est libre de se déplacer depuis sa positions d'ouverture vers sa position de fermeture ;
- le support de flotteur comprend au moins une troisième ouverture et/ou au moins une quatrième ouverture par l'intermédiaire de laquelle l'espace est destiné à communiquer avec l'intérieur de la cuve ;
- l'évent comprend une première pièce de siège de soupape par l'intermédiaire de laquelle le flotteur vient en appui contre le siège de soupape en position de fermeture.

L'invention a aussi pour objet un ensemble comprenant une cuve destinée à contenir un liquide, tel qu'un produit phytosanitaire ou un engrais liquide, et un couvercle tel que précédemment décrit.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
- la figure 1 est une vue éclatée d'un couvercle pour cuve selon un mode de réalisation de l'invention ;
- la figure 2 est une vue en coupe du couvercle illustré à la figure 1, le couvercle étant monté sur la cuve ;
- la figure 3 est une vue de détail, en coupe, d'un évent du couvercle illustré aux figures 1 et 2 ;
- la figure 4 est une autre vue de détail, en coupe, de l'évent du couvercle illustré aux figures 1 et 2 ;
- la figure 5 est une vue partielle, en perspective, d'une deuxième pièce de bouchon de l'évent illustré à la figure 3 ;
- la figure 6 est une vue en perspective d'une première pièce de support de l'évent illustré aux figures 3 et 4 ;
- la figure 7 est une vue en perspective d'une deuxième pièce de support de l'évent illustré aux figures 3 et 4.

### DESCRIPTION DETAILLEE

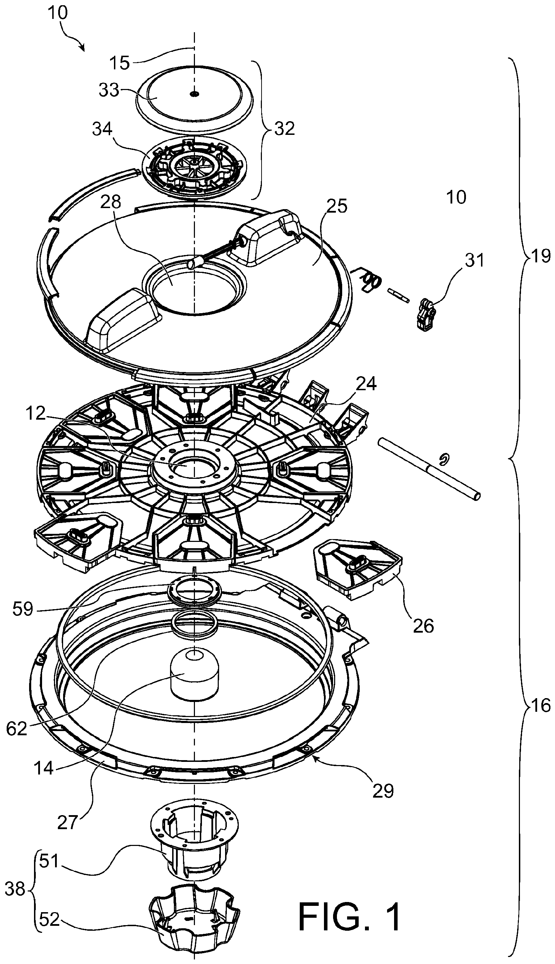

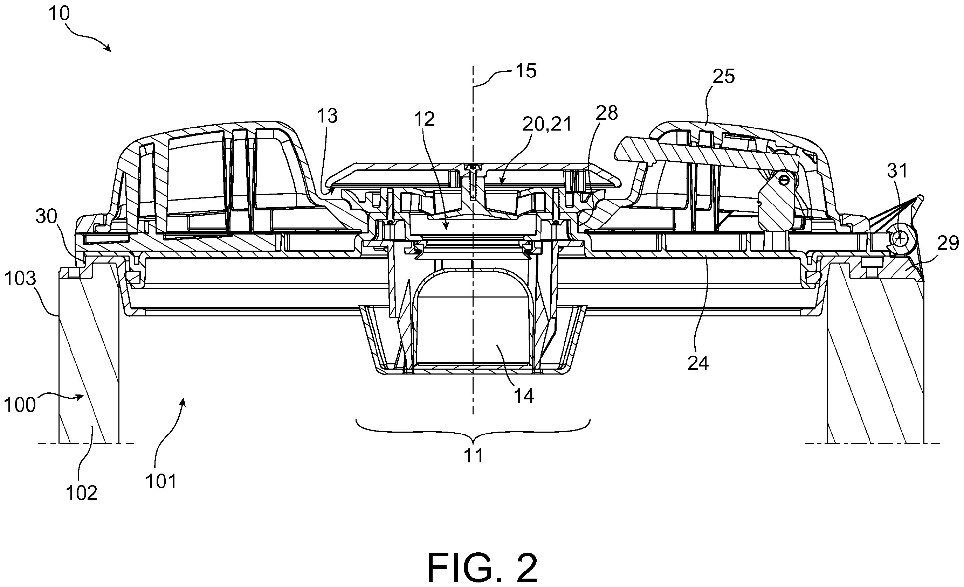

La figure 1 montre un couvercle 10 pour cuve 100, par exemple destinée à contenir un liquide, tel qu'un produit phytosanitaire ou un engrais liquide, le couvercle 10 obturant une ouverture 101 de la cuve 100 définie par un rebord d'ouverture 102. La figure 2 montre le couvercle 10 installé sur la cuve 100. La cuve 100 est par exemple destinée à équiper un engin agricole (non représenté).

Il est entendu par « liquide » que le produit contenu dans la cuve 100 comprend une phase liquide. Il présente par exemple la forme d'une solution ou encore d'une suspension.

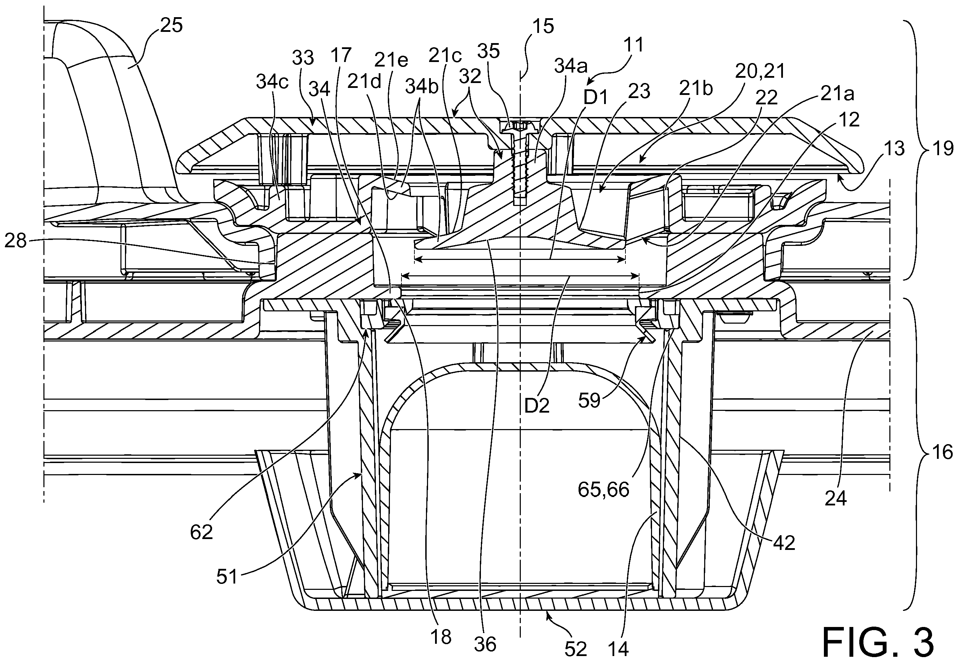

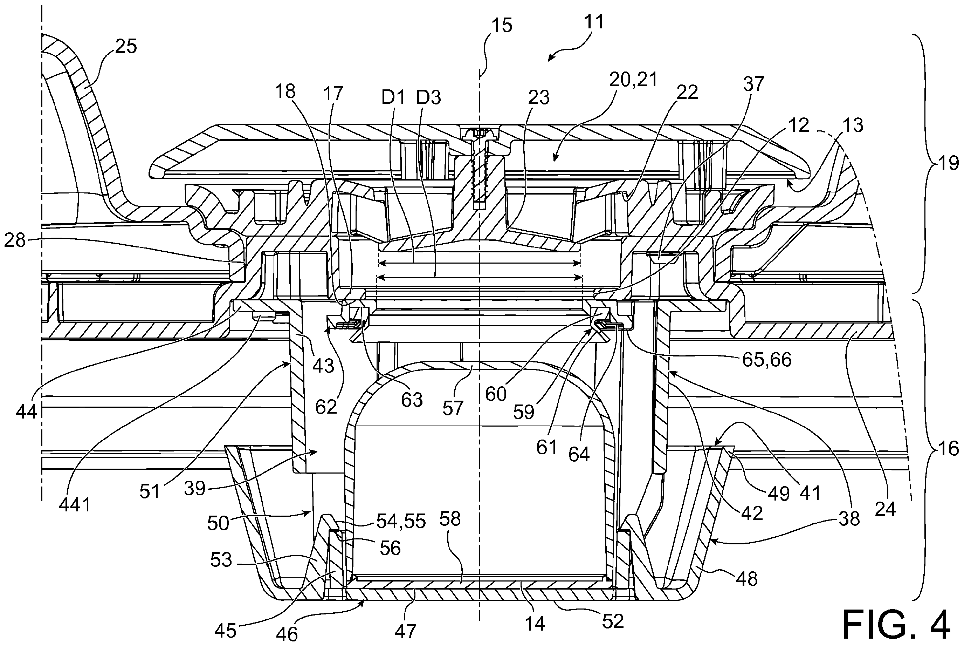

Le couvercle 10 comprend un évent 11 comprenant lui-même une première ouverture 12, au moins une deuxième ouverture 13 et un flotteur 14. Un exemple d'évent 11 est représenté plus en détail aux figures 3 et 4.

La première ouverture 12 est centrée sur un premier axe 15, autour duquel s'étend par exemple le rebord d'ouverture 102 de la cuve 100.

Dans la suite de la description, la direction axiale est la direction du premier axe 15. La direction radiale est en tout point une direction orthogonale au premier axe 15 et passant par ce dernier, et la direction circonférentielle est en tout point une direction orthogonale à la direction radiale et au premier axe 15. La direction axiale est par exemple verticale, les directions radiale et circonférentielle étant ainsi horizontales.

La première ouverture 12 communique avec l'intérieur de la cuve 100 d'un premier côté 16 de la première ouverture 12 suivant le premier axe 15. La première ouverture 12 comprend en outre un rebord d'ouverture 17 définissant, du premier côté 16 de la première ouverture 12, un siège de soupape 18.

La ou les deuxièmes ouvertures 13 communiquent d'une part avec l'extérieur de la cuve 100, et d'autre part avec la première ouverture 12, d'un deuxième côté 19 de la première ouverture 12 qui est opposé au premier côté 16 suivant le premier axe 15. La première ouverture 12 communique ainsi avec l'extérieur de la cuve 100 par l'intermédiaire de la ou des deuxièmes ouvertures 13. La ou les deuxièmes ouvertures 13 sont par exemple situées radialement à l'extérieur de la première ouverture 12 par rapport au premier axe 15.

Le flotteur 14 est conçu pour se déplacer, par flottement à la surface du liquide contenu dans la cuve 100, depuis une position d'ouverture vers une position de fermeture de la première ouverture 12 dans laquelle le flotteur 14 est en appui contre le siège de soupape 18 et obture la première ouverture 12.

Le flotteur 14 forme ainsi une soupape, qui est entraînée ou encore portée par le liquide contenu dans la cuve 100 vers la position de fermeture, lorsque le liquide entre en contact avec le flotteur 14.

En position de fermeture, le flotteur 14 bloque l'écoulement de fluides à travers l'évent 11. Il bloque aussi bien l'écoulement d'air à travers l'évent 11 depuis l'extérieur vers l'intérieur de la cuve 100, que celui du liquide contenu dans la cuve 100 vers l'extérieur de la cuve 100.

En position d'ouverture, le flotteur 14 libère la première ouverture 12, permettant ainsi la circulation d'air à travers l'évent 11. Les figures 3 et 4 montrent le flotteur 14 en position d'ouverture.

Le flotteur 14 vient ainsi bloquer la première ouverture 12, lorsque le niveau dans liquide contenu dans la cuve 100 est tel que le flotteur 14 occupe sa position de fermeture. Lorsque le niveau de liquide baisse dans la cuve 100, notamment par aspiration au moyen d'une pompe (non représentée), le flotteur 14 libère progressivement la première ouverture 12 jusqu'à la libérer complètement en position d'ouverture.

Selon l'invention, l'évent 11 comprend en outre au moins une chicane 20 par l'intermédiaire de laquelle la première ouverture 12 et la ou les deuxièmes ouvertures 13 communiquent ensemble, du deuxième côté 19 de la première ouverture 12.

De cette manière, la ou chacune des chicanes 20 définit un chemin 21 ou encore un parcours en zigzag, en aval du flotteur 14 dans un sens d'écoulement depuis l'intérieur vers l'extérieur de la cuve 100. Cela permet ainsi de ralentir du liquide, notamment sous forme de gouttelettes, qui provient de la cuve 100 et qui n'aurait pas été bloqué par le flotteur 14, en l'obligeant à serpenter à travers la ou les chicanes 20 pour l'empêcher de s'échapper de la cuve 100 par l'évent 11.

Le flotteur 14 et la ou les chicanes 20 sont ainsi montés en série. Ils forment des obstacles que le liquide contenu dans la cuve 100 doit franchir successivement pour s'échapper de la cuve 100 via l'évent 11.

L'évent 11 est donc plus fiable et permet plus efficacement d'empêcher le liquide contenu dans la cuve 100 de s'évacuer vers l'extérieur. L'évent 11 peut ainsi être dimensionné de sorte à autoriser un débit d'air, et donc un débit de liquide, plus important, sans risque de fuites du liquide contenu dans la cuve 100 par l'évent 11. Un débit de liquide plus important peut alors être aspiré, notamment au moyen de la pompe, hors de la cuve 100, par exemple pour le pulvériser dans des cultures.

Dans la suite de la description, l'évent 11 sera décrit comme comprenant une seule deuxième ouverture 13, sans que cela ne soit limitatif. Ainsi, il est entendu que l'homme du métier saura adapter la description qui suit au cas où l'évent 11 comprend plusieurs deuxièmes ouvertures 13.

De même, dans la suite de la description, l'évent 11 se décrit comme comprenant plusieurs chicanes 20, sans que cela ne soit limitatif. Ainsi, il est entendu que l'homme du métier saura adapter la description qui suit au cas où l'évent 11 ne comprend qu'une chicane 20.

Les chicanes 20 sont par exemple réparties, notamment régulièrement réparties, autour du premier axe 15.

Les chicanes 20 peuvent comprendre chacune au moins deux coudes 22, 23 se succédant entre la première ouverture 12 et la deuxième ouverture 13, de sorte à définir le chemin 21 en zigzag entre la première ouverture 12 et la deuxième ouverture 13 (figure 3).

Le chemin 21 défini par chacune des chicanes 20 comprend par exemple une première portion s'étendant globalement axialement depuis un premier orifice 21a orienté globalement axialement et situé en regard de la première ouverture 12, vers un premier 22 des coudes 22, 23.

Le ou les premiers orifices 21a forment ainsi un accès aux chemins 21 définis par les chicanes 20, notamment une entrée du point de vue du liquide contenu dans la cuve 100 et une sortie du point de vue de l'air provenant de l'extérieur de la cuve 100.

Par exemple, chacun des premiers orifices 21a forme un accès au chemin 21 défini par une seule des chicanes 20, la première portion des chemins 21 des chicanes 20 étant ainsi propre à chaque chicane 20.

En variante (non représentée), chacun des premiers orifices 21a forme un accès aux chemins 21 définis par plusieurs des chicanes 20, la première portion des chemins 21 desdites chicanes 20 étant ainsi commune.

Encore en variante (non représentée), les chemins 21 définis par toutes les chicanes 20 partagent un même premier orifice 21a, la première portion des chemins 21 desdites chicanes 20 étant ainsi commune.

Le chemin 21 défini par chacune des chicanes 20 comprend aussi une deuxième portion s'étendant radialement depuis le premier coude 22 vers un deuxième 23 des coudes 22, 23, situé radialement à l'intérieur par rapport au premier coude 22. La deuxième portion des chemins 21 est par exemple propre à chaque chicane 20.

Le chemin 21 défini par chacune des chicanes 20 comprend encore une troisième portion s'étendant depuis le deuxième coude 23 vers un deuxième orifice 21b qui est orienté globalement axialement, qui est agencé à l'opposé de la première ouverture 12 par rapport aux premier et deuxième coudes 22, 23, et qui communique avec la deuxième ouverture 13.

En variante (non représentée), la deuxième portion du chemin 21 défini par chaque chicane 20 s'étend circonférentiellement depuis le premier coude 22 vers le deuxième coude 23.

Encore en variante (non représentée), la deuxième portion du chemin 21 défini par chaque chicane 20 s'étend à la fois radialement et circonférentiellement depuis le premier coude 22 vers le deuxième coude 23.

Par exemple, plusieurs deuxièmes orifices 21b sont prévus, chacun des deuxièmes orifices 21b communiquant avec le chemin 21 défini par l'une des chicanes 20, la troisième portion des chemins 21 desdites chicanes 20 étant ainsi propre à chaque chicane 20, ou avec les chemins 21 définis par plusieurs chicanes 20, la troisième portion des chemins 21 desdites chicanes 20 étant ainsi commune.

En variante (non représentée), un seul deuxième orifice est prévu, le deuxième orifice 21b communiquant avec les chemins 21 de toutes les chicanes 20, la troisième portion des chemins 21 desdites chicanes 20 étant ainsi commune.

La deuxième portion du chemin 21 défini par chacune des chicanes 20 comprend par exemple aussi une première surface inclinée 21c ou encore en pente, orientée en regard du deuxième orifice 21b et s'étendant depuis le premier orifice 21a vers le deuxième coude 23 qui est axialement décalé dans un sens opposé à la première ouverture 12. La première surface inclinée 21c permet ainsi de diriger des gouttelettes de liquide s'étant échappées de la cuve 100 via le flotteur 14, vers le premier orifice 21a et donc vers la première ouverture 11 et l'intérieur de la cuve 100.

La deuxième portion du chemin 21 défini par chacune des chicanes 20 comprend par exemple encore une deuxième surface inclinée 21d ou encore en pente, orientée en regard du premier orifice 21a et s'étendant depuis le premier coude 22 vers le deuxième orifice 21b qui est axialement décalé vers la première ouverture 12 par rapport au premier coude 22. La deuxième surface inclinée 21d permet ainsi de diriger des gouttelettes de liquide s'étant échappées de la cuve 100 via le flotteur 14, vers le premier orifice 21a et donc vers la première ouverture 11 et l'intérieur de la cuve 100.

Le chemin 21 défini par chacune des chicanes 20 comprend par exemple aussi une quatrième portion s'étendant depuis le deuxième orifice 21b vers la deuxième ouverture 13 qui est située radialement à l'extérieur du deuxième orifice 21b et qui est axialement décalée par rapport aux premier et deuxième coudes 22, 23, dans un sens opposé à la première ouverture 12. La quatrième portion est par exemple commune à toutes les chicanes 20.

La deuxième ouverture 13 forme un accès aux chemins 21 définis par les chicanes 20, notamment une entrée du point de vue de l'air provenant de l'extérieur de la cuve 100 et une sortie du point de vue du liquide contenu dans la cuve 100.

La quatrième portion du chemin 21 défini par chacune des chicanes 20 peut encore comprendre une troisième surface inclinée 21e ou encore en pente, orientée d'un côté opposé au premier orifice 21a et s'étendant radialement de l'extérieur vers l'intérieur jusqu'au deuxième orifice 21b qui est axialement décalé vers la première ouverture 12. La troisième surface inclinée 21e permet ainsi de diriger des gouttelettes de liquide s'étant échappées de la cuve 100 via le flotteur 14, vers le deuxième orifice 21b où elles peuvent ensuite dirigées par la première surface inclinée 21c vers le premier orifice 21a et donc vers la première ouverture 11 et l'intérieur de la cuve 100. La troisième surface inclinée 21e est par exemple opposée à la deuxième surface inclinée 21d.

Le couvercle 10 comprend par exemple une première partie de couvercle 24 dans laquelle est formée la première ouverture 12.

Le couvercle 10 peut aussi comprendre une deuxième partie de couvercle 25 montée pivotante sur la première partie de couvercle 24 autour du premier axe 15 entre une première position angulaire de déblocage du couvercle 10 et une deuxième position angulaire de blocage du couvercle 10 dans laquelle le couvercle 10 est bloqué axialement sur le rebord d'ouverture 102 de la cuve 100 (figures 1 et 2).

Pour cela, le couvercle 10 comprend par exemple encore une pluralité d'organes de blocage 26 coopérant avec le rebord d'ouverture 102 de la cuve 100 pour bloquer axialement le couvercle 10 par rapport à la cuve 100, lorsque la deuxième partie de couvercle 25 occupe la deuxième position angulaire de blocage (figure 1).

Ces organes de blocage 26 présentent par exemple la forme de griffes entraînés par la deuxième partie de couvercle 25, en coulissement radial par rapport à la première partie de couvercle 24, depuis une position de déblocage vers une position de blocage, lorsque la deuxième partie de couvercle 25 pivote depuis la première position angulaire de déblocage vers la deuxième position angulaire de blocage. En position de blocage, les griffes 26 sont radialement plus rapprochées du premier axe 15 qu'en position débloquée et coopèrent avec une surface radialement extérieure 103 du rebord d'ouverture 102 de la cuve 100, notamment via une ou plusieurs encoches 27 creusées radialement dans cette surface, pour bloquer axialement le couvercle 10 par rapport à la cuve 100.

En variante (non représentée), ces organes de blocage 26 présentent la forme d'un filet extérieur coopérant avec un filet intérieur porté par une surface radialement intérieure du rebord d'ouverture 102 de la cuve 100, lorsque la deuxième partie de couvercle 25 pivote depuis la première position angulaire de déblocage vers la deuxième position angulaire de blocage.

La deuxième partie de couvercle 25 comprend par exemple aussi une ouverture 28 entourant la première ouverture 12 et par l'intermédiaire de laquelle le deuxième partie de couvercle 25 est montée pivotante sur la première partie de couvercle 24.

Le couvercle 10 peut encore comprendre une collerette 29 annulaire, s'étendant autour du premier axe 15 et fixée au rebord d'ouverture 102 de la cuve 100 (figures 1 et 2). En position de blocage, les organes de blocage 26 coopèrent en outre avec le rebord d'ouverture 102 de la cuve 100 par l'intermédiaire de la collerette 29.

Par exemple, les organes de blocage 26 coopèrent avec la surface radialement extérieure 103 du rebord d'ouverture 102 de la cuve 100 par l'intermédiaire de la collerette 29 présentant elle-même une surface radialement extérieure 30, dans laquelle sont par exemple creusées la ou les encoches 27.

La première partie de couvercle 24 est par exemple articulée sur la collerette 29 autour d'un deuxième axe 31, sensiblement perpendiculaire au premier axe 15, entre une position d'ouverture du couvercle 10 et une position de fermeture du couvercle 10 dans laquelle le couvercle 10 obture l'ouverture 101 de la cuve 100. La deuxième partie de couvercle 25 est en outre maintenue axialement à la première partie de couvercle 24, de sorte à basculer solidairement de la première partie de couvercle 24 autour du deuxième axe 31 entre la position d'ouverture et la position de fermeture.

La première partie de couvercle 24 est par exemple réalisée à partir de polypropylène (aussi appelé « PP »). Le polypropylène est par exemple aussi chargé de 20% en poids de talc.

La deuxième partie de couvercle 25 est par exemple aussi réalisée à partir de polypropylène, notamment chargé de 20% en poids de talc.

L'évent 11 comprend par exemple encore un bouchon 32 rapporté sur la première partie de couvercle 24, du deuxième côté 19 de la première ouverture 12, et dans lequel les chicanes 20 et la deuxième ouverture 13 sont formées (figure 3).

Pour cela, le bouchon 32 peut comprendre une première pièce de bouchon 33 et une deuxième pièce de bouchon 34 reliée ou encore fixée à la première pièce de bouchon 33 et axialement interposée entre la première pièce de bouchon 33 et la première partie de couvercle 24.

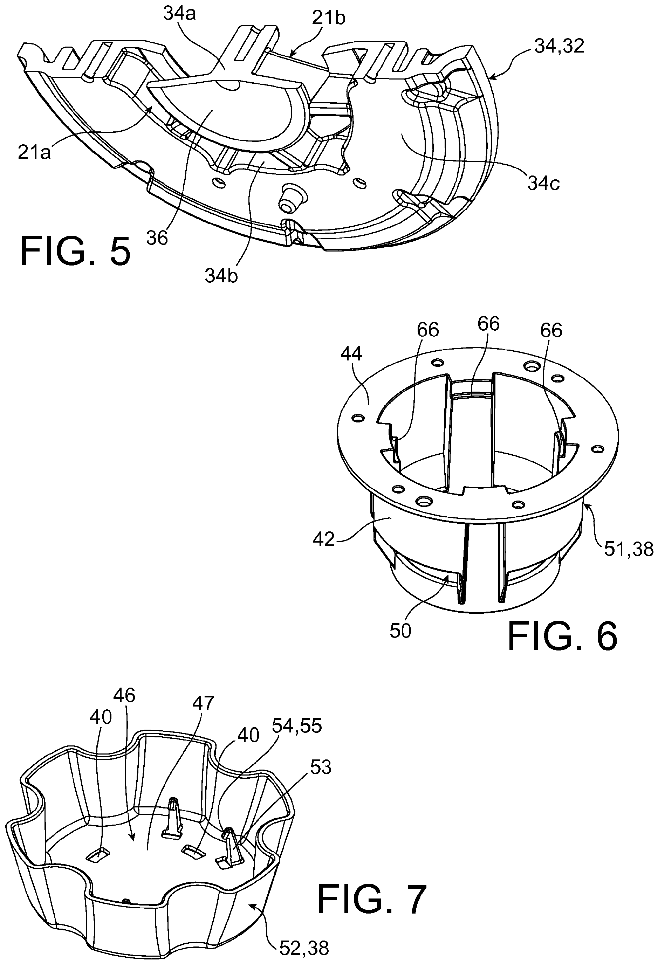

La deuxième pièce de bouchon 34 comprend une partie centrale 34a située en regard de la première ouverture 12, une partie périphérique radialement intérieure 34b entourant la partie centrale 34a et dans laquelle les chicanes 20 sont au moins en partie formées, et une partie périphérique radialement extérieure 34c entourant la partie périphérique radialement intérieure 34b et définissant la deuxième ouverture 13 avec la première pièce de bouchon 33. Un exemple de deuxième pièce de bouchon 34 est montré plus en détail à la figure 5.

La deuxième pièce de bouchon 34 est par exemple fixée à la première pièce de bouchon 33 par l'intermédiaire de la partie centrale 34a, notamment au moyen d'une vis 35 s'étendant axialement.

En variante (non représentée), la deuxième pièce de bouchon 34 est fixée à la première pièce de bouchon 33 par l'intermédiaire de la partie périphérique radialement extérieure 34c, notamment au moyen d'une ou plusieurs vis 35 s'étendant axialement.

La partie centrale 34a et la partie périphérique radialement intérieure 34b peuvent encore former ensemble une surface 36 continue, située en regard et à distance de la première ouverture 12. Une projection orthogonale de la surface 36, sur un plan (non représenté) perpendiculaire au premier axe 15, présente un diamètre D1 sensiblement égal à un diamètre D2 de la première ouverture 12. La surface 36 bloque ainsi axialement toute projection de liquide provenant de la cuve 100 via le flotteur 14. Il est entendu ici par « diamètres sensiblement égaux » que les diamètres sont égaux à 5%, voire à 2% près. Le diamètre D1 est par exemple égal à 52mm et le diamètre D2 à 53mm.

La partie périphérique radialement intérieure 34b porte par exemple la première portion 21a, le premier orifice 21b, le premier coude 22, la deuxième portion 21c, le deuxième coude 23, la troisième portion 21d et le deuxième orifice 21e du chemin 21 de chaque chicane 20. La partie périphérique radialement intérieure 34b porte par exemple encore la première surface inclinée 21c et/ou la deuxième surface inclinée 21d et/ou la troisième surface inclinée 21e.

La quatrième portion 21f de chemin 21 des chicanes 20 est par exemple formée entre la première pièce de bouchon 33 et les parties périphériques radialement intérieure 34b et radialement extérieure 34c de la deuxième pièce de bouchon 34.

La deuxième pièce de bouchon 34 est par exemple reliée ou fixée à la première partie de couvercle 24 par l'intermédiaire de la partie périphérique radialement extérieure 34c, notamment au moyen d'une pluralité de vis 37 s'étendant axialement et réparties autour du premier axe 15.

Le bouchon 32, notamment les première et deuxième pièces de bouchon 33, 34, sont par exemple réalisés à partir de polypropylène, notamment chargé de 20% en poids de talc.

L'évent 11 comprend par exemple aussi un support de flotteur 38 rapporté sur la première partie de couvercle 24, du premier côté 16 de la première ouverture 12 (figure 4). Le support de flotteur 38 définit avec la première partie de couvercle 24 un espace 39 à l'intérieur duquel le flotteur 14 est logé et est libre de se déplacer entre sa position d'ouverture et sa position de fermeture.

L'espace 39 communique en outre avec l'intérieur de la cuve 100 par l'intermédiaire d'au moins une troisième ouverture 40 et/ou au moins une quatrième ouverture 41 formées dans le support de flotteur 38.

Le support de flotteur 38 comprend par exemple une paroi latérale 42 s'étendant autour du premier axe 15 (figures 4 et 6).

La paroi latérale 42 comprend une première extrémité 43 entourant la première ouverture 12 et par l'intermédiaire de laquelle le support de flotteur 38 est relié ou encore fixé à la première partie de couvercle 24.

Pour cela, la première extrémité 43 de la paroi latérale 42 est par exemple pourvue d'une bride 44 s'étendant radialement dans un sens opposé au premier axe 15. La bride 44 est par exemple fixée à la première partie de couvercle 24, au moyen d'une ou plusieurs vis 441.

La paroi latérale 42 comprend aussi une deuxième extrémité 45 opposée à la première extrémité 43 suivant le premier axe 15, et par l'intermédiaire de laquelle la paroi latérale 42 est refermée par un fond 46 à distance de la première ouverture 12 (figures 3 et 6). La paroi latérale 42 et le fond 46 définissent ainsi ensemble l'espace 39. La paroi latérale 42 opère en outre un guidage du flotteur 14, pour son déplacement entre ses positions d'ouverture et de fermeture.

Le fond 46 peut encore comprendre une face de support 47 contre laquelle le flotteur 14 est conçu pour se reposer en position d'ouverture.

Pour cela, la face de support 47 est par exemple orthogonale au premier axe 15 et agencée en regard et à distance de la première ouverture 12.

La ou les troisièmes ouvertures 40 sont par exemple formées dans le fond 46 du support de flotteur 38, et débouchent notamment dans l'espace 39 sur la face de support 47. La ou les troisièmes ouvertures 40 permettent d'évacuer le liquide de la cuve 100 s'étant introduit dans l'espace 39, notamment sous le flotteur 14, c'est-à-dire entre le fond 46 et le flotteur 14.

Le fond 46 se prolonge par exemple par une portion 48 globalement tronconique s'évasant depuis le fond 46 vers une extrémité libre 49 orientée vers la première partie de couvercle 24 et définissant la quatrième ouverture 41 avec la paroi latérale 42. La quatrième ouverture 41 est ainsi globalement orientée axialement. Le fond 46 et la portion 48 globalement tronconique forme ensemble une coupelle.

La paroi latérale 42 peut encore être ajourée, notamment via une ou plusieurs cinquièmes ouvertures 50 orientées radialement, afin de permettre à la quatrième ouverture 41 de communiquer avec l'espace 39.

De cette manière, le liquide contenu dans la cuve 100 entre dans l'espace 39 via la quatrième ouverture 41 et la paroi latérale 42 ajourée. La quatrième ouverture 41 opère ainsi un ralentissement du débit de liquide contenu dans la cuve 100 vers l'espace 39, donnant suffisamment de temps au flotteur 14 pour réagir et se déplacer vers la position de fermeture, limitant les risques de fuites de liquide vers les chicanes 20.

L'extrémité libre 49 de la portion 48 globalement tronconique présente par exemple aussi, dans un plan (non représenté) perpendiculaire au premier axe 15, une forme ondulée. Cela permet par exemple le passage d'un outil pour le montage et serrage des vis 441.

Le support de flotteur 38 comprend par exemple aussi une première pièce de support 51 par l'intermédiaire de laquelle le support de flotteur 38 est rapporté sur la première partie de couvercle 24, et une deuxième pièce de support 52 montée sur la première pièce de support 51. Un exemple de première pièce de support 51 est montré plus en détail à la figure 6, tandis qu'un exemple de deuxième pièce de support 52 est montré plus en détail à la figure 7.

La première pièce de support 51 porte par exemple la paroi latérale 42, et le cas échéant la bride 44.

La deuxième pièce de support 52 porte par exemple le fond 46, et le cas échéant la portion 48 globalement tronconique.

La deuxième pièce de support 52 est par exemple montée sur la première pièce de support 51 par emboîtement élastique.

Pour cela, la deuxième pièce de support 52 peut comprendre une pluralité de pions 53 déformables élastiquement, s'étendant globalement axialement depuis la face de support 47 vers une extrémité libre 54. L'extrémité libre 54 des pions 53 est en outre pourvue d'une dent 55 s'étendant radialement vers le premier axe 15.

La dent 55 de chacun des pions 53 est en outre engagée avec un bord 56 d'une des cinquièmes ouvertures 50, le bord 56 étant orienté vers la première ouverture 12, de sorte à bloquer axialement la deuxième pièce de support 52 dans un sens opposé à la première ouverture 12.

En variante (non représentée), les dents 55 des pions 53 sont engagées avec une ou plusieurs encoches creusées radialement dans la paroi latérale 42 vers le premier axe 15, ou encore un ou plusieurs orifices radiaux formés dans la paroi latérale 42.

Le support de flotteur 38, notamment les première et deuxième pièces de support 51, 52, sont par exemple réalisés à partir de polypropylène, notamment chargé de 20% en poids de talc.

Le flotteur 14 comprend par exemple un corps de forme cylindrique, notamment en forme de cylindre de révolution, s'étendant entre une première extrémité 57 par l'intermédiaire de laquelle le flotteur 14 vient en appui contre le siège de soupape 18 en position de fermeture, et une deuxième extrémité 58 opposée suivant le premier axe 15, par l'intermédiaire de laquelle le flotteur 14 repose contre la face de support 47 du fond 46 en position d'ouverture.

La première extrémité 57 présente par exemple une forme bombée. Elle forme un dôme.

Le corps du flotteur 14 est par exemple creux et rempli de gaz, notamment d'air ou encore d'hélium. Le choix du gaz dépend de la ligne de flottaison souhaitée pour le flotteur 14.

Le corps du flotteur 14 est par exemple formé à partir de deux parties soudées l'une à l'autre de manière étanche et entre lesquelles le gaz est emprisonné.

Le corps du flotteur 14 est par exemple réalisé à partir de polypropylène.

L'évent 11 comprend par exemple aussi une première pièce de siège de soupape 59 par l'intermédiaire de laquelle le flotteur 14 vient en appui contre le siège de soupape 18 en position de fermeture (figures 3 et 4).

La première pièce de siège de soupape 59 comprend une portion annulaire 60 agencée en regard de la première ouverture 12 et à partir de laquelle s'étend une portion tronconique 61 s'évasant depuis la portion annulaire 60 vers le flotteur 14 et contre laquelle le flotteur 14, notamment sa première extrémité 57, vient en appui en position de fermeture.

La première pièce de soupape 59 est déformable élastiquement, afin d'améliorer l'étanchéité de la liaison entre le flotteur 14 et la portion tronconique 61, lorsque le flotteur 14 est en position de fermeture.

Pour cela, la première pièce de soupape 59 est par exemple réalisée à partir d'un matériau élastomère, tel que du caoutchouc naturel, du nitrile, notamment du butadiène-acrylonitrile (aussi appelé « caoutchouc nitrile » ou encore « NBR »), ou encore d'un élastomère fluorocarboné appelé « FPM » selon la norme DIN/ISO ou « FKM » selon la norme ASTM, et qui est par exemple commercialisé sous la marque VITON^{®}.

L'évent 11 peut encore comprendre une deuxième pièce de siège de soupape 62, globalement annulaire, dans laquelle est logée la portion annulaire 60 de la première pièce de siège de soupape 59, notamment via une rainure 63 de forme complémentaire.

La portion tronconique 61 de la première pièce de siège de soupape 59 fait quant à elle saillie de la deuxième pièce de siège de soupape 62 vers le flotteur 14.

La deuxième pièce de siège de soupape 62 peut comprendre des protubérances radiales 64 prévues pour coopérer avec une face 65 de la portion annulaire 60 de la première pièce de siège de soupape 59, globalement perpendiculaire au premier axe 15 et orientée vers le flotteur 14. Les protubérances radiales 64 retiennent ainsi axialement la portion annulaire 60 de la première pièce de siège de soupape 59 dans la rainure 63 de la deuxième pièce de siège de soupape 62.

La deuxième pièce de siège de soupape 62 dépasse par exemple radialement vers le premier axe 15, par rapport à la première ouverture 12, un diamètre interne D3 de la deuxième pièce de siège de soupape 62 étant sensiblement égal au diamètre D1 de la projection orthogonale de la surface 36 formée en continue par la partie centrale 34a et la partie périphérique radialement intérieure 34b de la deuxième pièce de bouchon 34. La surface 36 bloque ainsi axialement toute projection de liquide provenant de la cuve 100 via le flotteur 14. Il est entendu ici par « diamètres sensiblement égaux » que les diamètres sont égaux à 5%, voire à 2% près. Le diamètre D1 est par exemple égal à 53mm et le diamètre D3 à 54mm.

La deuxième pièce de siège de soupape 62 est par exemple portée par le support de flotteur 38, notamment par la paroi latérale 42, qui applique la deuxième pièce de siège de soupape 62 contre le siège de soupape 18.

Pour cela, un ou plusieurs épaulements 66 sont par exemple prévus dans la paroi latérale 42 du support de flotteur 38, la deuxième pièce de siège de soupape 62 étant enserrée entre le ou les épaulements 66 et le siège de soupape 18.

La deuxième pièce de soupape 62 est par exemple réalisée à partir de polypropylène, notamment chargé de 20% en poids de talc.

Le couvercle 10 décrit ci-dessus est particulièrement avantageux car il comprend un évent 11 pourvu d'un flotteur 14 en série avec des chicanes 20, de sorte que du liquide provenant de la cuve 100 et s'échappant via le flotteur 14 est ralenti par les chicanes 20, qui l'empêchent ainsi de sortir de la cuve 100. Le dimensionnement de l'évent 11 peut alors être prévu pour autoriser un débit d'air plus important, sans risquer des fuites de liquide à l'extérieur de la cuve 100. Un débit de liquide plus important peut alors être aspiré par la pompe hors de la cuve 100, par exemple pour être pulvérisé dans des cultures.

## Revendications

1. Couvercle (10) pour cuve (100) destinée à contenir un liquide, tel qu'un produit phytosanitaire ou un engrais liquide, le couvercle (10) étant destiné à obturer une ouverture (101) de la cuve (100) définie par un rebord d'ouverture (102), le couvercle (10) comprenant un évent (11) comprenant lui-même :
- une première ouverture (12) centrée sur un premier axe (15) de direction axiale et destinée à communiquer avec l'intérieur de la cuve (100) d'un premier côté (16) de la première ouverture (12) suivant le premier axe (15),
- au moins une deuxième ouverture (13) par l'intermédiaire de laquelle la première ouverture (12) est destinée à communiquer avec l'extérieur de la cuve (100), d'un deuxième côté (19) de la première ouverture (12) qui est opposé au premier côté (16) suivant le premier axe (15),
- au moins une chicane (20) par l'intermédiaire de laquelle la première ouverture (12) et la ou les deuxièmes ouvertures (13) communiquent ensemble, du deuxième côté (19) de la première ouverture (12), **caractérisé en ce que** la première ouverture (12) comprend en outre un rebord d'ouverture (17) formant, du premier côté (16) de la première ouverture (12), un siège de soupape (18), et **en ce que** l'évent comprend en outre un flotteur (14) conçu pour se déplacer, par flottement à la surface du liquide contenu dans la cuve (100), depuis une position d'ouverture vers une position de fermeture de la première ouverture (12) dans laquelle le flotteur (14) est en appui contre le siège de soupape (18), le flotteur (14) formant ainsi une soupape.

2. Couvercle (10) selon la revendication 1, dans lequel la ou chacune des chicanes (20) comprend au moins deux coudes (22, 23) se succédant entre la première ouverture (12) et la, l'une des ou les deuxièmes ouvertures (13).

3. Couvercle (10) selon la revendication 2, dans lequel un chemin (21) défini par la ou chacune des chicanes (20) entre la première ouverture (12) et la, l'une des ou les deuxièmes ouvertures (13) comprend :
- une première portion (21a) s'étendant globalement axialement depuis un premier orifice (21b), orienté globalement axialement et situé en regard de la première ouverture (12), vers un premier (22) des coudes (22, 23),
- une deuxième portion (21c) s'étendant radialement et/ou circonférentiellement par rapport au premier axe (15), depuis le premier coude (22) vers un deuxième (23) des coudes (22, 23),
- une troisième portion (21d) s'étendant depuis le deuxième coude (23) vers un deuxième orifice (21e) qui est orienté globalement axialement, qui est axialement décalé des premier et deuxième coudes (22, 23), dans un sens opposé à la première ouverture (12), et qui communique avec la, l'une des ou les deuxièmes ouvertures (13).

4. Couvercle (10) selon l'une des revendications 1 à 3, comprenant une première partie de couvercle (24) dans laquelle est formée la première ouverture (12), et dans lequel l'évent (11) comprend en outre un bouchon (32) rapporté sur la première partie de couvercle (24), du deuxième côté (19) de la première ouverture (12), et dans lequel la ou les chicanes (20) et la ou les deuxièmes ouvertures (13) sont formées.

5. Couvercle (10) selon la revendication 4, dans lequel le bouchon (32) comprend :
- une première pièce de bouchon (33), et
- une deuxième pièce de bouchon (34) reliée à la première pièce de bouchon (33) et axialement interposée entre la première pièce de bouchon (33) et la première partie de couvercle (24), la deuxième pièce de bouchon (34) comprenant :
o une partie centrale (34a) située en regard de la première ouverture (12),
o une partie périphérique radialement intérieure (34b) par rapport au premier axe (15), entourant la partie centrale (34a) et dans laquelle la ou les chicanes (20) sont au moins en partie formées,
o une partie périphérique radialement extérieure (34c) par rapport au premier axe (15), entourant la partie périphérique radialement intérieure (34b) et définissant la ou les deuxièmes ouvertures (13) avec la première pièce de bouchon (33).

6. Couvercle (10) selon la revendication 3 combinée aux revendications 4 et 5, dans lequel la partie périphérique radialement intérieure (34b) de la deuxième pièce de bouchon (34) porte la première portion (21a), le premier orifice (21b), le premier coude (22), la deuxième portion (21c), le deuxième coude (23), la troisième portion (21d) et le deuxième orifice (21e) du chemin 21 de la ou de chaque chicane 20.

7. Couvercle (10) selon la revendication 5 ou la revendication 6, dans lequel la partie centrale (34a) et la partie périphérique radialement intérieure (34b) de la deuxième pièce de bouchon (34) forment ensemble une surface (36) continue située en regard et à distance de la première ouverture (12), une projection orthogonale de ladite surface, sur un plan perpendiculaire au premier axe (15), présentant un diamètre (D1) sensiblement égal à un diamètre (D2) de la première ouverture (12).

8. Couvercle (10) selon l'une des revendications 1 à 7, comprenant une première partie de couvercle (24) dans laquelle est formée la première ouverture (12), et dans lequel l'évent (11) comprend un support de flotteur (38) rapporté sur la première partie de couvercle (24), du premier côté (16) de la première ouverture (12), et définissant avec la première partie de couvercle (24) un espace (39) à l'intérieur duquel le flotteur (14) est logé et est libre de se déplacer depuis sa positions d'ouverture vers sa position de fermeture.

9. Couvercle (10) selon la revendication 8, dans lequel le support de flotteur (38) comprend au moins une troisième ouverture (40) et/ou au moins une quatrième ouverture (41) par l'intermédiaire de laquelle l'espace (39) est destiné à communiquer avec l'intérieur de la cuve (100).

10. Couvercle (10) selon l'une des revendications 1 à 9, dans lequel l'évent (11) comprend une première pièce de siège de soupape (59) par l'intermédiaire de laquelle le flotteur (14) vient en appui contre le siège de soupape (18) en position de fermeture.

11. Ensemble comprenant une cuve (100) destinée à contenir un liquide, tel qu'un produit phytosanitaire ou un engrais liquide, et un couvercle (10) selon l'une des revendications 1 à 10.

## Patentansprüche

1. Deckel (10) für einen Tank (100), der bestimmt ist, ein Pflanzenschutzmittel oder einen flüssigen Dünger zu enthalten, wobei der Deckel (10) bestimmt ist, eine Öffnung (101) des Tanks (100) zu verschließen, die von einem Öffnungsrand (102) definiert ist, wobei der Deckel (10) eine Entlüftungsöffnung (11) umfasst, die selbst umfasst:
- eine erste Öffnung (12), die auf einer ersten axial ausgerichteten Achse (15) zentriert ist und bestimmt ist, mit dem Inneren des Tanks (100) zu kommunizieren, auf einer ersten Seite (16) der ersten Öffnung (12) gemäß der ersten Achse (15),
- mindestens eine zweite Öffnung (13), über die die erste Öffnung (12) bestimmt ist, mit außerhalb des Tanks (100) zu kommunizieren, auf einer zweiten Seite (19) der ersten Öffnung (12), die der ersten Seite (16) gegenüberliegt, gemäß der ersten Achse (15),
- mindestens eine Ablenkung (20), über die die erste Öffnung (12) und die zweite/n Öffnung/en (13) gemeinsam kommunizieren, auf der zweiten Seite (19) der ersten Öffnung (12), **dadurch gekennzeichnet, dass** die erste Öffnung (12) ferner einen Öffnungsrand (17) umfasst, der auf der ersten Seite (16) der ersten Öffnung (12) einen Ventilsitz (18) bildet und dass die Entlüftungsöffnung ferner einen Schwimmer (14) umfasst, der eingerichtet ist, um sich durch Schwimmen auf der Oberfläche der Flüssigkeit, die in dem Tank (100) enthalten ist, aus einer Öffnungsposition in eine Verschlussposition der ersten Öffnung (12) zu verlagern, in der sich der Schwimmer (14) auf dem Ventilsitz (18) abstützt, wobei der Schwimmer (14) somit ein Ventil bildet.

2. Deckel (10) nach Anspruch 1, wobei die oder jede der Ablenkungen (20) mindestens zwei Krümmungen (22, 23) umfasst, die einander zwischen der ersten Öffnung (12) und der, einer der oder den zweiten Öffnungen (13) folgen.

3. Deckel (10) nach Anspruch 2, wobei ein von der oder jeder der Ablenkungen (20) zwischen der ersten Öffnung (12) und der, einer der oder den zweiten Öffnungen (13) definierte Weg (21) umfasst:
- einen ersten Abschnitt (21a), der sich allgemein axial ab einem ersten Loch (21b), das allgemein axial ausgerichtet ist und der ersten Öffnung (12) zugewandt ist, in Richtung einer ersten (22) der Krümmungen (22, 23) erstreckt,
- einen zweiten Abschnitt (21c), der sich radial und/oder umfangmäßig im Verhältnis zur ersten Achse (15) ab der ersten Krümmung (22) in Richtung einer zweiten (23) der Krümmungen (22, 23) erstreckt,
- einen dritten Abschnitt (21d), der sich ab der zweiten Krümmung (23) in Richtung eines zweiten Lochs (21e) erstreckt, das allgemein axial ausgerichtet ist, das allgemein von der ersten und zweiten Krümmung (22, 23) axial versetzt ist, in einer Richtung entgegengesetzt zur ersten Öffnung (12), und das mit der, einer der oder den zweiten Öffnungen (13) kommuniziert.

4. Deckel (10) nach einem der Ansprüche 1 bis 3, umfassend einen ersten Deckelteil (24), in dem die erste Öffnung (12) ausgebildet ist, und in dem die Entlüftungsöffnung (11) ferner einen Stopfen (32) umfasst, der auf dem ersten Deckelteil (24) auf der zweiten Seite (19) der ersten Öffnung (12) angebracht ist, und in dem die Ablenkung/en (20) und die zweite/n Öffnung/en (13) ausgebildet sind.

5. Deckel (10) nach Anspruch 4, wobei der Verschluss (32) umfasst:
- ein erstes Stopfenstück (33), und
- ein zweites Stopfenstück (34), das mit dem ersten Stopfenstück (33) verbunden ist und zwischen dem ersten Stopfenstück (33) und dem ersten Deckelteil (24) axial angeordnet ist, wobei das zweite Stopfenstück (34) umfasst:
o einen zentralen Teil (34a), der sich der ersten Öffnung (12) zugewandt befindet,
o einen im Verhältnis zur ersten Achse (15) radial inneren peripheren Teil (34b), der den zentralen Teil (34a) umgibt und in dem die Ablenkung/en (20) mindestens zum Teil ausgebildet sind,
o einen im Verhältnis zur ersten Achse (15) radial äußeren peripheren Teil (34c), der den radial inneren peripheren Teil (34b) umgibt und die zweite/n Öffnung/en (13) mit dem ersten Stopfenstück (33) definiert.

6. Deckel (10) nach Anspruch 3, kombiniert mit den Ansprüchen 4 und 5, wobei der radial innere periphere Teil (34b) des zweiten Stopfenstücks (34) den ersten Abschnitt (21a), das erste Loch (21b), die erste Krümmung (22), den zweiten Abschnitt (21c), die zweite Krümmung (23), den dritten Abschnitt (21d) und das zweite Loch (21e) des Wegs (21) der oder jeder Ablenkung (20) trägt.

7. Deckel (10) nach Anspruch 5 oder Anspruch 6, wobei der zentrale Teil (34a) und der radial innere periphere Teil (34b) des zweiten Stopfenstücks (34) gemeinsam eine kontinuierliche Oberfläche (36) bilden, die sich der ersten Öffnung (12) zugewandt und von ihr beabstandet befindet, wobei eine orthogonale Projektion der Oberfläche auf eine zur ersten Achse (15) senkrechte Ebene einen Durchmesser (D1) aufweist, der etwa gleich einem Durchmesser (D2) der ersten Öffnung (12) ist.

8. Deckel (10) nach einem der Ansprüche 1 bis 7, umfassend einen ersten Deckelteil (24), in dem die erste Öffnung (12) ausgebildet ist, und in dem die Entlüftungsöffnung (11) einen Schwimmerhalter (38) umfasst, der auf dem ersten Deckelteil (24) auf der ersten Seite (16) der ersten Öffnung (12) angebracht ist, und mit dem erste Deckelteil (24) einen Raum (39) definiert, in dessen Inneren der Schwimmer (14) untergebracht ist und frei ist, sich aus seiner Öffnungsposition in seine Verschlussposition zu verlagern.

9. Deckel (10) nach Anspruch 8, wobei der Schwimmerhalter (38) mindestens eine dritte Öffnung (40) und/oder mindestens eine vierte Öffnung (41) umfasst, über die der Raum (39) bestimmt ist, mit dem Inneren des Tanks (100) zu kommunizieren.

10. Deckel (10) nach einem der Ansprüche 1 bis 9, wobei die Entlüftungsöffnung (11) ein erstes Ventilsitzteil (59) umfasst, über das sich der Schwimmer (14) in Verschlussposition auf dem Ventilsitz (18) abstützt.

11. Anordnung, umfassend einen Tank (100), der bestimmt ist, eine Flüssigkeit wie ein Pflanzenschutzmittel oder einen flüssigen Dünger zu enthalten, und einen Deckel (10) nach einem der Ansprüche 1 bis 10.

## Claims

1. A cover (10) for a tank (100) for containing a liquid, such as a plant protection product or a liquid fertiliser, the cover (10) being for sealing an opening (101) of the tank (100) defined by an opening rim (102), the cover (10) comprising a vent (11) itself comprising:
- a first opening (12) centred on a first axis (15) with axial direction and for communicating with the interior of the tank (100) on a first side (16) of the first opening (12) along the first axis (15),
- at least a second opening (13) via which the first opening (12) is for communicating with the exterior of the tank (100), on a second side (19) of the first opening (12) which is opposite to the first side (16) along the first axis (15),
- at least one baffle (20) through which the first opening (12) and the second opening(s) (13) communicate with each other, on the second side (19) of the first opening (12), **characterized in that** the first opening (12) further comprises an opening flange (17) forming, on the first side (16) of the first opening (12), a valve seat (18), and **in that** the vent further comprises a float (14) designed to move, by floating on the surface of the liquid contained in the tank (100), from an opening position to a closing position of the first opening (12) in which the float (14) abuts against the valve seat (18), the float (14) thus forming a valve.

2. The cover (10) according to claim 1, wherein the or each baffle (20) comprises at least two bends (22, 23) succeeding each other between the first opening (12) and the, one of, or all the second opening(s) (13).

3. The cover (10) according to claim 2, wherein a path (21) defined by the or each of the baffles (20) between the first opening (12) and the, one of, or all the second openings (13) comprises:
- a first portion (21a) extending overall axially from a first, overall axially oriented, port (21b) facing the first opening (12) to a first (22) of the bends (22, 23),
- a second portion (21c) extending radially and/or circumferentially relative to the first axis (15), from the first bend (22) to a second (23) of the bends (22, 23)
- a third portion (21d) extending from the second bend (23) to a second port (21e) which is overall axially oriented, which is axially offset from the first and second bends (22, 23), in a direction opposite to the first opening (12), and which communicates with the, one of, or all the second opening(s) (13).

4. The cover (10) according to any of claims 1 to 3, comprising a first cover part (24) in which the first opening (12) is formed, and wherein the vent (11) further comprises a plug (32) inserted to the first cover part (24), on the second side (19) of the first opening (12), and in which the one or more baffles (20) and the one or more second openings (13) are formed.

5. The cover (10) according to claim 4, wherein the plug (32) comprises:
- a first plug piece (33), and
- a second plug piece (34) connected to the first plug piece (33) and axially interposed between the first plug piece (33) and the first cover part (24), the second plug piece (34) comprising:
o a central part (34a) facing the first opening (12),
o a radially internal peripheral part (34b) relative to the first axis (15), surrounding the central part (34a) and in which the baffle(s) (20) is/are at least partly formed,
o a radially external peripheral part (34c) relative to the first axis (15), surrounding the radially internal peripheral part (34b) and defining the second opening(s) (13) with the first plug piece (33).

6. The cover (10) according to claim 3 in combination with claims 4 and 5, wherein the radially internal peripheral part (34b) of the second plug piece (34) carries the first portion (21a), the first port (21b), the first bend (22), the second portion (21c), the second bend (23), the third portion (21d) and the second port (21e) of the path (21) of the or each baffle (20).

7. The cover (10) according to claim 5 or claim 6, wherein the central part (34a) and the radially internal peripheral part (34b) of the second plug piece (34) together form a continuous surface (36) facing away from the first opening (12), an orthogonal projection of said surface, onto a plane perpendicular to the first axis (15), having a diameter (D1) substantially equal to a diameter (D2) of the first opening (12).

8. The cover (10) according to any of claims 1 to 7, comprising a first cover part (24) in which the first opening (12) is formed, and wherein the vent (11) comprises a float support (38) inserted to the first cover part (24), on the first side (16) of the first opening (12), and defining with the first cover part (24) a space (39) within which the float (14) is housed and is free to move from its opening position to its closing position.

9. The cover (10) according to claim 8, wherein the float support (38) comprises at least one third opening (40) and/or at least one fourth opening (41) through which the space (39) is for communicating with the interior of the tank (100).

10. The cover (10) according to any of claims 1 to 9, wherein the vent (11) comprises a first valve seat piece (59) via which the float (14) abuts against the valve seat (18) in the closing position.

11. An assembly comprising a tank (100) for containing a liquid, such as a plant protection product or a liquid fertiliser, and a cover (10) according to any of claims 1 to 10.
